# EUROPEAN PATENT APPLICATION

(11) **EP 4 521 537 A1**
(43) Date of publication of application: **12.03.2025**
(21) Application number: 23219804.4
(22) Date of filing: 22.12.2023
(51) Int. Cl.: H01M 50/333

(54) **VALVE FOR VENTING AND DEGASSING A HOUSING OF AN ELECTROCHEMICAL DEVICE**

(30) Priority: 05.09.2023 EP 23195391
(71) Applicant: MoldTecs-01-2022 GmbH, 38667 Bad Harzburg (DE)
(72) Inventor: RATAJCZACK, Christelle, 53061 Laval cedex 9 (FR); HEIM, Matthias, 96515 Sonneberg (DE)
(74) Representative: STT Sozietät Thews & Thews

(57) **Abstract**

The invention relates to a valve for mounting on a housing 5 of an electrochemical device and for venting and degassing a housing 5. The valve comprises a flange plate 1 for mounting on the housing 5 with the flange plate 1 having a centre axis C and forming a central gas channel 1.1. The central gas channel 1.1 extends preferred over the entire length of the flange plate 1 along the centre axis C. The valve further comprises a valve body 2 arranged at the gas channel 1.1 with the valve body 2 being preloaded by means of at least one elastic element 2.3 positioned on top of the valve body 2 for closing the gas channel 1.1. The valve body 2 having at least one gas opening 2.1 and a membrane 2.2 permeable to gaseous media, wherein the gas opening 2.1 is sealed by the membrane 2.2. The membrane 2.2 covers the opening 2.1 of the valve body 2 with the effect that only gas can flow through the opening 2.1 that permeates the membrane 2.2. For liquids the membrane 2.2 is tight. The safety of the electrochemical device is to increase through stabilization and reduction of the risk of condensate inside the housing 5. For this the membrane 2.2 is arranged on top of the valve body 2.

## Description

### TECHNICAL FIELD

The invention relates to a valve for mounting on a housing of an electrochemical device and for venting and degassing a housing. The valve comprises a flange plate for mounting on the housing with the flange plate having a centre axis and forming a central gas channel. The central gas channel extends preferred over the entire length of the flange plate along the centre axis. The valve further comprises a valve body arranged at the gas channel with the valve body being preloaded by means of at least one elastic element positioned on top of the valve body for closing the gas channel. The valve body having at least one gas opening and a membrane permeable to gaseous media, wherein the gas opening is sealed by the membrane. The membrane covers the opening of the valve body with the effect that only gas can flow through the opening that permeates the membrane. For liquids the membrane is tight.

### BACKGROUND

Typical housings for receiving electronic components such as e. g., battery cells cannot be closed completely gas-tightly relative to the environment because due to temperature fluctuations and due to naturally occurring compressed air fluctuations, a gas exchange between the interior of the housing and the environment must be made possible in order to prevent bursting or bulging of the housing. For this reason, a valve with a ventilation system for the housing is used. This valve has also the function to prevent the penetration of foreign bodies like dirt, moisture and liquid water or other liquids because otherwise damages at the electrical system are imminent, in the worst case a short circuit fault. Therefore, valves are known which comprise semipermeable membranes that are gas-permeable but liquid-impermeable to enable a ventilation.

In addition to such a ventilation, such valves must provide emergency degassing of the housing. When inside the housing a pressure peak occurs, for example, upon failure of a battery cell in a battery housing, this pressure must be released as quickly as possible because otherwise the housing might become damaged. The degassing is reversable if it is possible without damaging the membrane.

Therefore, valve bodies are used for carrying the membrane and are moved in case of overpressure in the housing to open a gas channel for degassing. In the event of degassing, the increased pressure in the housing causes the valve body to be lifted against its preload of the elastic element. As soon as the pressure drops to a certain level, the valve body moves back into the sealed and closed position.

In the description, reference is made to the central axis C, which defines an X direction and an opposite Y direction. Each direction X, Y, axial direction, radial direction, circumferential direction and coaxial or parallel direction or position is in relation to the centre axis.

Document DE 10 2019 100 085 A1 describes such a degassing unit with a membrane carrier, that can be displaced by overpressure against the force of a spring to release an emergency degassing opening. A semi-permeable membrane is provided under the valve body that is lifted together with membrane axially and releases an emergency degassing opening bypassing the membrane.

It is an object of the present invention to provide a valve for a housing of electronic components, which increases the safety of the electrochemical device through stabilization and reduction of the risk of condensate inside the housing.

According to a first aspect of the invention, the object is solved by the feature that the membrane is arranged on top of the valve body. On top of the valve body is identical to the position in a direction X of the centre axis C in front of the valve body. This in front position is a position between the valve body and a top cover for the valve.

Several advantages can be achieved with this position. A first significant advantage of that position of the membrane on top of the valve body is that the membrane can be carried and supported from below by the valve body. If a liquid flows from the outside in the valve towards the top of the valve body, for example due to cleaning work on a vehicle, then the membrane is stabilised by the valve body. If, on the other hand, the membrane is positioned on the underside of the valve body, i.e., on the side of the valve body facing the housing, then the membrane would have no support and the water would elastically stress the membrane. Further protection against the penetration of water or oil is achieved by the fact that the membrane is basically permeable for gases but at the same time being hydrophobic and oleophobic to prevent the penetration of vapour from water and oil.

Another significant advantage of positioning the membrane on the top of the valve body is that on the other side, on the bottom side of the valve body facing the housing there is space to assemble a further pressure regulation system. In this relation with the position of the membrane on top of the valve body a further aspect of the invention is that the gas opening of the valve body can be closed by means of a plug, with the plug being attached to the valve body in opposite to the membrane. The plug is a second valve body. The plug is preloaded by means of an elastic member in a direction Y in opposite direction to the preloaded direction of the valve body. The elastic member is positioned in the direction X below the support ribs in a cavity formed by the valve body. A sealing element is arranged between the plug and the gas opening of the valve body.

For degassing and thus as protection against overpressure in the housing only the valve body opens the gas channel and therefore is moving against the preload force in the direction Y. The plug remains closed during excess degassing pressure in the housing.

In the ventilation mode the valve body is closed, to enable only a diffusion flow through the membrane. To increase the safety of the valve, the diffusion through the membrane should be reduced in time. The reduction is achieved by closing of the gas opening via the plug to prevent ventilating through the membrane. The plug makes the ventilation only possible in case of a negative pressure relative to the environment in the housing. In ventilation mode the gas flow through the membrane can be regulated only in the direction X by the plug depending on the pressure in the housing relative to the environment. Depending on the setting of the elastic member for preloading the plug, the gas opening is only opened at an increased pressure difference between the environment and the volume in the housing to enable a diffusion flow through the membrane. The diffusion through the membrane is thus limited in time, whereby the air exchange in the housing is correspondingly lower. Accordingly, the amount of condensate in the housing is reduced, which is automatically introduced into the housing with the air exchange.

In relation to the supporting function, the gas opening is provided with support ribs which are designed as a part of the valve body to support the membrane with the support ribs being positioned in the direction X below the membrane. The membrane is positioned on top of the valve body and on top of the support ribs. The support ribs are arranged as back-up for the membrane and run like a grid in a plane perpendicular to the centre axis. When water or any other liquid medium from the environment enters the valve and stream onto the membrane, the support ribs prevent overstretching the membrane in the direction X or tearing of the membrane. Especially when a gush of liquid is flowing in the direction X onto the membrane the support of the membrane is important.

The safety of the valve is further increased by the fact that a cover is assembled to the flange plate for covering the gas channel and to guide the valve body in the radial direction. The cover protects the gas channel and the sealing from external influences and stores the valve body. The valve body is guided and supported from the cover as a bearing element in such a way that it moves essentially in parallel to the centre axis up and down.

According to another aspect of the invention, at least one discharge opening is provided in the cover, the discharge opening being s-shaped or labyrinth-shaped or meander-shaped. To prevent contamination particles from entering the housing, the valve is closed with a cover facing upwards in the direction Y. However, for ventilation and degassing it is necessary that the gas can flow out of the housing into the environment and vice versa. For this purpose, discharge openings are provided in the cover so that the gas can flow in and out without obstruction. To prevent water from directly entering the valve and thus also the housing, the discharge openings are s-shaped or meander-shaped. The impulse of the water penetrating the discharge opening from the outside essentially in a radial direction is reduced and dissolved by deflecting the water flow several times. This feature completes the protection of the membrane by support ribs against damages which could be caused by a dynamic penetration of water due to the related impulse on the membrane.

To preload the valve body in the direction X, it is provided, that the elastic element is positioned between the cover and the top of valve body to preload the valve body in the direction of the centre axis. The elastic element is designed in the form of a cylindrical or conical helical spring.

In relation to the arrangement from the elastic element and the membrane on the same side of the valve body it is advantageous, that the membrane is ring-shaped with an opening in the centre of the membrane, whereby the elastic element inserted through the central opening of the membrane and is seated in a pot bearing of the valve body. The central opening has a diameter that is larger than the outer diameter of the elastic element. The valve body forms a pot in its centre, into which the elastic element is inserted in an axial direction and is guided in radial direction. On the side of the elastic element opposite the pot bearing, the cover forms a pin on which the elastic element is put on and is also guided in the radial direction. The elastic element is stabilised by the pot bearing and the pin, which also stabilises the valve body against tilting about the central axis C. This more stable bearing has the advantage that the valve body opens much more precisely in the event of overpressure in the lower limit range.

In relation to the number of the elastic elements on top of the valve body it is another aspect of the invention, that more than three elastic elements or more than six elastic elements are positioned to preload the valve body. By using multiple helical springs as an elastic element with smaller diameters instead of one helical spring with a large diameter, the forces around the valve body can be distributed more precisely. Helical springs with a smaller diameter have an advantageous spring rate. The spring rate is inversely proportional to the diameter of the coil of a helical spring. As the diameter of a helical spring increases, the spring rate decreases. In other words, each individual coil of a small spring does more work than that of a large spring. By using several helical springs with small diameters, the spring rate of each individual helical spring can be chosen to be lower than the spring rate of a helical spring with a large diameter.

For simple constructions it is an aspect of the invention, that the elastic element has an inner diameter that is larger than the diameter of the membrane.. The larger the inner diameter of the elastic element, the more stable is this kind of an elastic bearing of the valve body in the radial direction. With an enlarged inner diameter it is very simple to place the membrane on the same side of the valve body as the elastic element, i.e., on top of the valve body. For this purpose, the diameter of the membrane is smaller, but as large or almost as large as the diameter of the gas channel.

In relation to the storing of the valve body in the cover another aspect of the invention is, that sliding elements are provided on the inside of the cover, on which the valve body is sliding in the direction of the centre axis. The sliding elements are arranged in parallel to the centre axis and in radial direction next to the valve body.

The safety of a valve can also be increased by the possibility that the valve body can be precisely adjusted regarding the pressure at which it has to open. Such a precise adjustment can be achieved by reducing the friction of the valve body in its bearings. So, a further aspect of the invention is, that the valve body is mounted in the cover in such a way that the valve body is freely movable in the circumferential direction. There is no need for any additional guidance of the valve body, so friction is minimized. The valve body is sealed to the flange plate using a gasket. The valve body, which is freely movable in the circumferential direction, has the advantage that the contact surface of the gasket is not stressed on one side. The freedom of movement in the circumferential direction changes the relative position between the contact surface of the gasket and the sealing surface on the flange plate.

For safety reasons one aspect of the invention is, that the flange plate has a sealing surface with a conical or spherical geometry coaxial with the centre axis and the gasket arranged on the valve body is centred on the sealing surface by this geometry. The valve body centres itself automatically when lowering. A bearing clearance of some hundredths of a millimetre in the radial direction required for centring is given between the sliding elements in the cover and the valve body.

This bearing clearance further reduces the friction between the valve body and the cover. To arrange the gasket on the valve body and not at the flange plate has the advantage, that a housing can be preinstalled with the flange plate attached to the housing. In case of pre-attaching without the gasket the gasket cannot become lost or be damaged during handling and mounting the housing.

Another aspect for safety reasons is, that the gas channel has one single opening with a flow cross section. The gas channel is empty over the entire length of the flange plate in the direction of the centre axis and over its entire flow cross section. An open flow cross section in the sense of this invention means that in the flow cross section and correspondingly in the gas channel, no grid, ribs, or other elements are arranged which could influence, disturb or reduce the flow in the gas channel from the opening in the housing into the gas channel. The gas channel has a diameter that is larger than the diameter of the membrane. The flow rate or flow capacity in the gas channel is thereby maximised in the event of a degassing emergency.

In relation to a simple detecting of any degassing process it is advantageous, that a sensor is provided that detects a change in the force or stress of at least one elastic element. Such a sensor is positioned between the elastic element and the cover or between the elastic element and the valve body. Such a pressure sensor, for example in the form of a piezoelectric element or a strain gauge, works completely without contacts and even with extremely small movements of the valve body in the range of a few hundredths of a millimetre.

### BRIEF DESCRIPTION OF THE DRAWINGS

Various aspects of the invention, including its features and advantages, will be readily understood from the example embodiments discussed in the following detailed description and the accompanying drawings, in which:
- Figure 1: illustrates an exploded view drawing of a valve;
- Figure 2: illustrates a view from the bottom side on a valve;
- Figure 3: illustrates a valve body with a membrane and a plug;
- Figure 4a: illustrates a sectional view s-s` according to fig. 2 with a closed valve body;
- Figure 4b: illustrates a sectional view s-s' according to fig. 2 with an open valve body;
- Figure 5: illustrates a sectional view s-s' according to fig. 2 with a plug in the valve body;
- Figure 6: illustrates a sectional view with a ring-shaped membrane;
- Figure 7a: illustrates the shape of the membrane according to the embodiments shown in figures 2 to 5;
- Figure 7b: illustrates the shape of the membrane according to the embodiments shown in figure 6 and
- Figure 8: illustrates a diagram of the volume of gas flow depending on the pressure in the housing.

### DETAILED DESCRIPTION

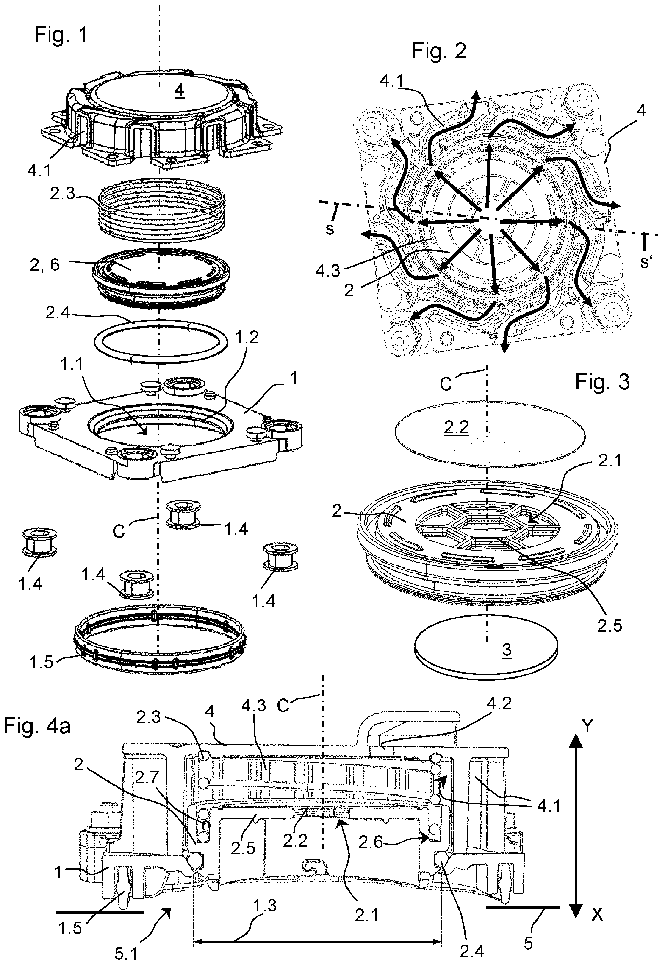

Figure 1, 4a, 4b, 5 and 6 shows the basic structure of a valve comprising a flange plate 1 with a gas channel 1.1, a valve body 2, 6 with a gasket 2.4 for closing the gas channel 1.1 tightly. For this purpose, the valve body 2, 6 is provided with a gasket 2.4 that closes with a sealing surface 1.2 of the gas channel 1.1. In the simple embodiment shown one single elastic element 2.3 is arranged above the valve body 2, 6 to preload the valve body 2, 6. According to a more precise embodiment, not shown, several individual elastic elements are provided for pretensioning the valve body. The valve is mounted with the flange plate 1 on a housing 5 for a battery to close an opening 5.1 as shown in figures 4a to 6. The flange plate 1 is screwed to the housing 5 for which sleeves 1.4 are inserted into the flange plate 1. Further fastenings can be provided by clamps or snap-in devices or by a thread or bayonet lock. The flange plate 1 is sealed from the housing 5 via a sealing member 1.5 surrounding the opening 5.1. Furthermore, a cover 4 with discharge openings 4.1, 4.2 is provided to cover the gas channel 1.1 and to support the valve body 2 moving in direction of the centre axis C of the valve.

The valve basically seals the opening 5.1 from the environment. During normal operation of a battery, the pressure in the housing can rise or fall by a relatively small amount. To compensate for these relatively small pressure differences, a gas opening 2.1 is provided in the valve body 2. The gas opening 2.1 is sealed with a membrane 2.2 that is permeable for gas and tight for liquids. Through the membrane 2.2 that closes the gas opening 2.1 gas can permeate out of and into the housing. To the extent that the slight pressure exchange through the membrane 2.2 takes place, this is called ventilation. During ventilation the valve body 2 is closed and does not move (see figure 4a).

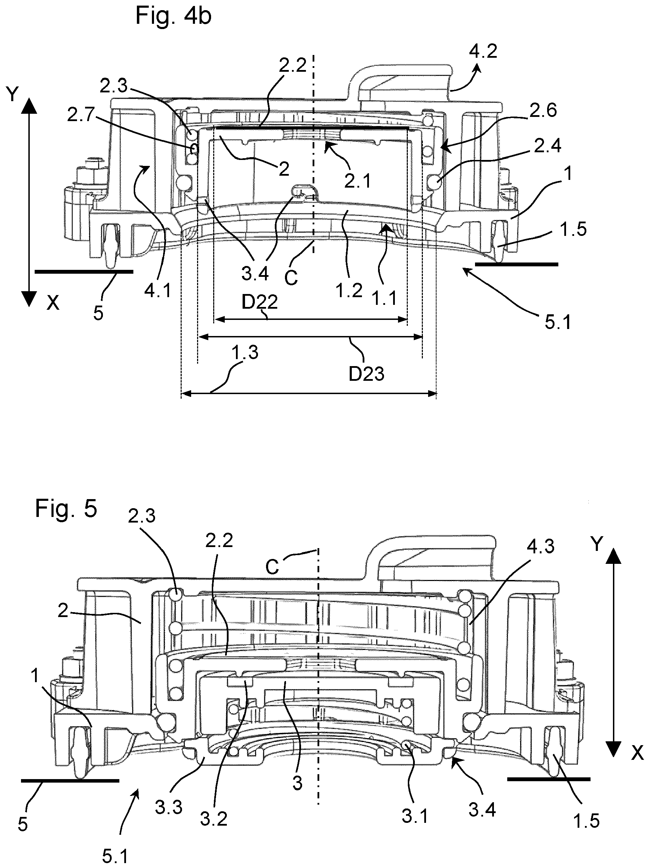

In case of a short-circuit or other defect of the battery in the housing 5 or due to a chemical reaction, a gas is produced and thus an extreme pressure increase occurs in the housing 5 and emergency degassing of the housing 5 is necessary. The membrane 2.2 is not sufficiently permeable, which is why the gas channel 1.1 closed by the valve body 2 is opened. For degassing the valve body 2 is lifted against the force of the elastic element 2.3 and the gas channel 1.1 is open for gas streaming out of the housing 5 (see figure 4b). A pressure sensor, not shown, is provided between the elastic element 2.3 and the cover 4, which, starting from a closed position of the valve body 2, is designed to detect the slightest change in the force of the elastic element 2.3 and thus any movement of the valve body 2.

To increases the safety of the electrochemical device the membrane 2.2 is arranged on top of the valve body 2. This allows the membrane 2.2 to be supported and stabilized by the valve body 2 from below if large quantities of liquid enter through the discharge openings 4.1, 4.2 in the cover 4. The position of the membrane 2.2 on the top side of the valve body 2 makes it also possible to install a further pressure control system on the underside of the valve body 2 facing the housing 5 that increases the safety.

Figure 3 shows an explosion view of the valve body 2. The membrane 2.2 is circular shaped and is arranged in the direction X above, that is on top of the valve body 2 and is connected gas-tight to the valve body 2 in its edge area. The gas opening 2.1 in the middle of the valve body 2 is completely covered and sealed by the membrane 2.2. The valve body 2 has ribs 2.5 provided in the gas opening 2.1 to stabilise the membrane 2.2. The stabilisation of the membrane 2.2 is intended in case liquids enter the valve from the outside through the discharge openings 4.1, 4.2. The impulse and the weight of the entering water are critical for the membrane 2.2, so that the ribs 2.5 increase the safety of the electrochemical device. Basically, the cover 4 initially protects against the ingress of large amounts of liquid and extreme stress on the membrane 2.2. However, since the cover 4 must be open for both ventilation and degassing, it cannot fundamentally be avoided that the membrane 2.2 is subjected to critical stress due to too much liquid. As shown in detail in figures 2, 4a, 4b and 5 discharge openings 4.1, 4.2 are provided on the cover 4 that allow ventilation and degassing. To protect against the direct and immediate penetration of liquids such as water that is sprayed onto the housing 5 from the outside, shapes are necessary to reduce the impulse of water that is under pressure on the outside of the cover 4. For this purpose, the discharge openings 4.1, 4.2 in the cover 4 are designed in a meandering shape as shown in figure 2. The discharge openings 4.1, 4.2 could also be s-shaped or labyrinth-shaped or the like. The cover 4 has a cylindrical shape with discharge openings 4.1 located in radial direction on the side wall. In addition, there is at least one axial discharge opening 4.2 in an axial direction on top of the cover 4. This axial discharge opening 4.2 is positioned in the top side of the cover 4. When the valve body 2 is open for degassing some gas is streaming via the radial discharge openings 4.1 on the side wall. However, some of this gas flows on the upper side of the cover 4. This creates a back pressure on the valve body 2. Due to this back pressure the lift of the valve is smaller. With the axial discharge opening 4.2 this backpressure is reduced and the lift of the valve body 2 is greater.

As shown in detail in figures 4a, 4b, 5 and 6 the elastic element 2.3 preloads the valve body 2 in the direction X and is arranged on top of the valve body 2, between the valve body 2 and the top surface of the cover 4. According to the invention, the membrane 2.2 and the elastic element 2.3 are arranged both on the top of the valve body 2.

The positioning of the membrane (2.2) and the elastic element (2.3) on the same side of the valve body (2) is possible after a first embodiment according to the figures 1 to 5, because the diameter D23 of the elastic element 2.3 is larger than the diameter D22 of the membrane 2.2. To support and stabilize the elastic element 2.3, a groove 2.6 is provided in the valve body 2 around the membrane 2.2, which serves as a seat for the elastic element 2.3.

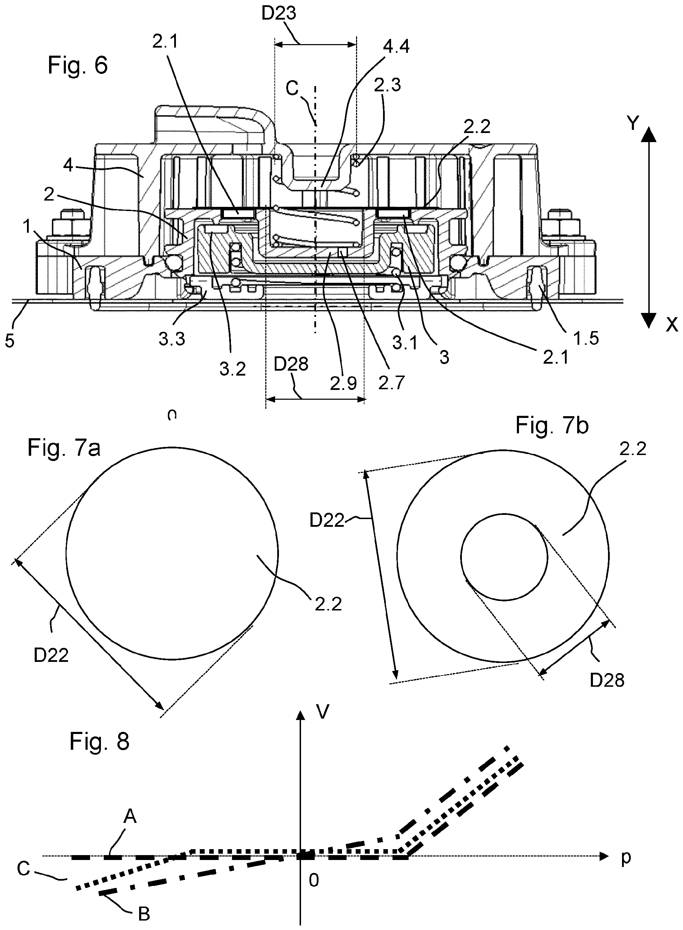

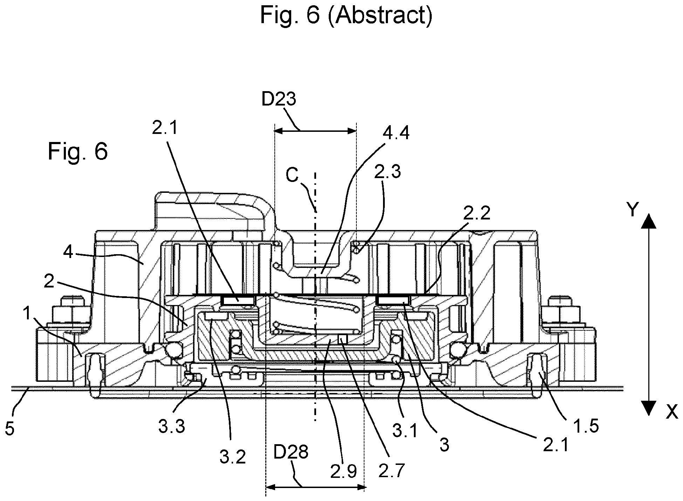

A preferred embodiment is shown in Fig. 6. The elastic element 2.3 has a central position with an outer diameter D23 that is smaller than the outer diameter D22 of the membrane 2.2. For this the membrane 2.2 is ring-shaped and has a central opening 2.8. The diameter D28 of the central opening 2.8 is larger than the outer diameter D23 of the elastic element 2.3. The elastic element 2.3 is inserted through the central opening 2.8 of the membrane 2.2. The membrane 2.2 is arranged around the elastic element 2.3. To guide and to bear the elastic element 2.3 the valve body 2 is provided with a pot bearing 2.9 in which the elastic element 2.3 is seated. The opposite side of the elastic element 2.3 is put on a pin 4.4 of the cover 4. The pin 4.4 and the pot bearing 2.9 support the elastic element 2.3 in a radial direction and guide it in an axial direction during compression and decompression of the elastic element 2.3. The diameters of the pot bearing 2.9 and the pin 4.4 have a fitting that is just large enough for the elastic element 2.3 to be mounted and to be fixed tightly in the radial direction.

The membrane 2.2 is ring-shaped with an opening 2.8 in the centre of the membrane 2.2, whereby the elastic element 2.3 inserted through the central opening 2.8 of the membrane 2.2 and is seated in a pot bearing 2.9 of the valve body 2 whereby the central opening 2.8 has a diameter D22 that is larger than the outer diameter D23 of the elastic element 2.3.

The figure 7a shows the circular geometry of the membrane 2.2 according to the embodiments illustrated in the figures 2-5 and figure 7b shows the geometry of the ring-shaped membrane 2.2 according to the embodiment illustrated in the figure 6.

As shown in Figures 4a, 4b and 6 drainage holes 2.7 are provided all around in the outer edge of the groove 2.6 and also on the bottom of the pot bearing (2.9). In the event that liquid media has penetrated into the cover 4, the drainage holes 2.7 ensure that the medium does not accumulate in the groove 2.6 or in the pot bearing (2.9) but flows out of the groove 2.6 and the pot bearing (2.9) and thus does not influence the dynamics of the elastic element 2.3. To open the gas channel 1.1 with a flow cross section 1.3 the valve body 2 moves upwards in the direction of the centre axis C. In case of a flap design of the valve body the preload could affect around an axis being aligned rectangular to the centre axis C.

In ventilation mode, i.e. when the valve body 2 is closed, a natural exchange of moisture takes place through the membrane 2.2 (see figure 4a). This causes the moisture present in the air to be introduced into the housing 5. Under certain circumstances, the moisture can produce condensation in the housing 5, which is not desirable and reduces the safety of the electrochemical device. The condensate can lead to undesired electrochemical reactions and electrical voltage errors. As shown in Figure 5, a plug 3 is provided below the valve body 2, on the opposite side of the membrane 2.2. This plug 3 closes the gas opening 2.1 with a sealing element 3.2. This prevents any gas exchange and thus also any formation of condensate. The plug 3 is preloaded against the valve body 2 in the Y direction with an elastic member 3.1, so that no gas can flow out of the housing 5 through the membrane. At a certain negative pressure in the housing 5, the plug 3 is moved in the direction X according to the setting of the elastic member 3.1 and thus the gas opening 2.1 is free for ventilation. The plug 3 and the elastic member 3.1 are attached to the valve body 2 by means of a locking element 3.3. The locking element 3.3 has an open, free-flowing cross-section through which any medium can pass at any time. The locking element 3.3 can be weld, screwed or as shown here fixed by bayonet system 3.4.

The valve body 2 is mounted and stored in the cover 4 in such a way that there is as little friction as possible between the valve body 2 and the cover 4 and other components of the valve when moving up and down. For this purpose, several sliding elements 4.3 are provided in the cover 4, which are arranged parallel to the centre axis C and to which the valve body 2 has a bearing clearance of some hundredths of a millimetre in the radial direction. The valve body 2 is precisely centred relative to the gas channel 1.1 within the scope of this bearing clearance via the conical shaped sealing surface 1.2 on the gas channel 1.1. The sliding elements 4.3 are arranged next to one another in the circumferential direction and serve to ensure that the valve body 2 does not have contact with the cover 4 with its completely radial outer surface (see also figure 2). There is no provision for further guidance of the valve body 2 in the cover 4 or in the flange plate 1. As far as the pressure of the elastic element 2.3 allows, the valve body 2 can move as freely in the radial direction as in the circumferential direction. In an axial direction, the movement of the valve body 2 depends solely on the settings of the elastic element 2.3. By reducing friction, it is possible to adjust the settings of the elastic element extremely precisely and thus set degassing exactly depending on the pressure in the housing 5.

The valve according to the invention has a modular design. In principle, a valve body 6 (see figure 1) without a gas opening 2.1 can be used as option A. In this case, there is no ventilation. The valve body 6 is only opened for degassing in an emergency due to the settings of the preload of the elastic element 2.3. Figure 8 shows a simplified diagram in which the volume V of gas exchange is shown as a function of pressure p. Ventilation is displayed with a lower gradient than degassing. The graph A represents for option A the corresponding volumetric flow for this case. Starting from a negative pressure in the housing 5, no gas flows up to a certain positive pressure. Only when the critical pressure is reached in an emergency, degassing takes place. When the valve body 6 opens, the volume of gas flowing increases.

A second possibility of the modular system covers with an option B the case according to the embodiments shown in figures 3, 4a, 4b and 5. The valve body 2 has at least one gas opening 2.1 which is covered by the membrane 2.2. The corresponding graph B in Figure 8 shows, starting in the negative pressure range, a low gas exchange which is possible up to the overpressure range within the scope of ventilation. In the case of a critical overpressure, the volume also increases when the degassing process begins and the valve body 2 is lifted.

The third modular option C uses a plug 3 according to the embodiments shown in figures 5 and 6, which limits ventilation in normal operation when the valve body 2 is closed to cases where there is negative pressure in the housing 5. The corresponding graph C shows in the negative pressure range that ventilation is only possible below a certain negative pressure, when the plug 3 is open. According to the settings of the sealing element 3.2 the gradient is higher than at ventilation, lower than at degassing. At lower negative pressure and up to a critical overpressure, no ventilation takes place. Only at critical overpressure in an emergency, the valve body 2 opens for degassing.

To avoid repetition and for the sake of clarity of the figures, not all reference numbers are shown in all figures. However, each element has its own reference number, which may be included in another figure than in the figure described.

## Claims

1. A valve for mounting on a housing (5) of an electrochemical device and for venting and degassing a housing (5), the valve comprising
a) a flange plate (1) for mounting on a housing (5) with the flange plate (1) having a centre axis (C) and forming a central gas channel (1.1);
b) a valve body (2) arranged at the gas channel (1.1) with the valve body (2) being preloaded by means of at least one elastic element (2.3) positioned on top of the valve body (2) for closing the gas channel (1.1) and
c) the valve body (2) having at least one gas opening (2.1) and a membrane (2.2) permeable to gaseous media, wherein the gas opening (2.1) is sealed by the membrane (2.2), **characterized in that**
the membrane (2.2) is arranged on top of the valve body (2).

2. Valve according to claim 1,
**characterized in that**
the gas opening (2.1) of the valve body (2) can be closed by means of a plug (3), with the plug (3) being attached to the valve body (2) in opposite to the membrane (2.2).

3. Valve according to claim 1 or 2,
**characterized in that**
the gas opening (2.1) is provided with support ribs (2.5) which are designed as a part of the valve body (2) to support the membrane (2.2), with the support ribs (2.5) being positioned in the direction X below the membrane (2.2).

4. Valve according to any one of the preceding claims,
**characterized in that**
a cover (4) is assembled to the flange plate (1) for covering the gas channel (1.1) and to guide the valve body (2) in the radial direction.

5. Valve according to claim4,
**characterized in that**
the cover (4) is provided with at least one discharge opening (4.1), whereby the discharge opening (4.1) being s-shaped or labyrinth-shaped or meander-shaped.

6. Valve according to one of the claims 4 and 5,
**characterized in that**
the elastic element (2.3) is positioned between the cover (4) and the top of the valve body (2) to preload the valve body (2) in the direction X of the centre axis (C).

7. Valve according to any one of the preceding claims,
**characterized in that**
that the membrane (2.2) is ring-shaped with an opening (2.8) in the centre of the membrane (2.2), whereby the elastic element (2.3) inserted through the central opening (2.8) of the membrane (2.2) and is seated in a pot bearing (2.9) of the valve body (2) .

8. Valve according to one of the claims 4 to 7,
**characterized in that**
sliding elements (4.3) are provided on the inside of the cover (4), on which the valve body (2) is sliding in the direction of the centre axis (C) and in the circumferential direction.

9. Valve according to one of the claims 4 to 8,
**characterized in that**
the valve body (2) is mounted in the cover (4) in such a way that the valve body (2) is freely movable in the circumferential direction.

10. Valve according to any one of the preceding claims,
**characterized in that**
the flange plate (1) has a sealing surface (1.2) with a conical or spherical geometry coaxial with the centre axis (C) and a gasket (2.4) arranged on the valve body (2) is centred on the sealing surface by this geometry.

11. Valve according to any one of the preceding claims,
**characterized in that**
the gas channel (1.1) has one single opening.

12. Valve according to any one of the preceding claims,
**characterized in that**
a sensor is provided that detects a change in the force or stress of at least one elastic element (2.3).

13. A modular system consisting of a valve according to claim 1 and a plug (3) according to claim 2 and a closed valve body (6) that is free of any gas opening, wherein the valve body (2) and the closed valve body (6) can be replaced as needed without any modifications to the valve structure, and the valve body (2) can be used without the plug (3) or with the plug (3) assembled in the valve.

14. A system consisting of a valve according to any one of the preceding claims 1 to 11 and a housing (5) and at least an electronic component arranged in the housing (5), in particular a battery.

15. A method for exchanging gas in and out of a battery-housing (5) with a valve, with the valve having a flange plate (1) assembled at the housing (5) and the flange plate (1) having a gas channel (1.1) and the gas channel (1.1) being closable with a moveable valve body (2) preloaded by a elastic element (2.3) and the valve body (2) having a gas opening (2.1) which is covered with a gas-permeable membrane (2.2) and a cover (4) assembled on top of the flange plate (1), **characterized in that** the membrane (2.2) an the elastic element (2.3) are both positioned in the direction X on top of the valve body (2).
